# EUROPEAN PATENT APPLICATION

(11) **EP 1 968 171 A2**
(43) Date of publication of application: **10.09.2008**
(21) Application number: 08250345.9
(22) Date of filing: 29.01.2008
(51) Int. Cl.: H02K 11/04

(54) **Rotating Rectifier**

(30) Priority: 09.03.2007 GB 0704552
(71) Applicant: Goodrich Control Systems Ltd, Solihull B90 4LA (GB)
(72) Inventor: Fakult, Joseph Paul, Willoughby Hills OH 44092 (US); Bomford, Raymond Richard, Chalfont St Peter Sl9 OET (GB)
(74) Representative: Bailey, Richard Alan

(57) **Abstract**

A rotatable rectifier arrangement comprises a rectifier component electrically connected to a bus bar (16, 18), the bus bar (16, 18) being provided with at least one fan blade formation (30).

## Description

This invention relates to a rectifier, and in particular to a rotatable rectifier arranged, in use, to rotate with at least part of another device, for example with the rotor of an electrical generator.

One form of electrical generator used in aerospace applications is a three-stage generator. A first stage of the generator comprises a permanent magnet rotor which rotates relative to a wound stator to produce an output current in the stator windings. At least part of the output current is rectified and used to excite a main exciter stator winding. Current is induced in a series of main exciter rotor windings, upon rotation thereof, which is rectified by a rotating rectifier and used to excite a main rotor winding. The main rotor winding, in turn, induces a current in a main stator winding. The rotors of the three stages are interconnected or coupled together so as to be rotatable with one another, the rotating rectifier rotating with the rotors.

The rotating rectifier includes a series of pairs of diodes connected to respective ends of each of the main exciter rotor windings. The anodes of one of each pair of diodes are connected to a first bus bar, and the cathodes of the remaining ones of the diodes are connected to a second bus bar. The DC output from the rectifier to the main rotor winding is taken from the two bus bars.

The diodes used in the rectifier need to be kept below a predetermined critical temperature, in use, to avoid damage thereto. In some devices, the diodes are bathed in a coolant liquid. However, the use of coolant liquids is impractical in many devices. In air cooled arrangements, size and weight constraints limit the ability to achieve cooling using heat sinks and the like. Arrangements are known in which fan blades are used to induce air currents over and around the diodes to improve cooling. For example, US 5998893 describes an arrangement in which a rectifier has a fan blade component associated therewith to cool the rectifier. However, the provision of an additional fan blade component may be undesirable due to the size and weight constraints mentioned above. Other rotating cooling arrangements are described in US 4144932 and US 3844031 and suffer from the same disadvantages as mentioned above.

According to the present invention there is provided a rotatable rectifier arrangement comprising a rectifier component electrically connected to a bus bar, the bus bar being provided with at least one fan blade formation.

It will be appreciated that, in use, rotation of the rectifier arrangement causes the fan blade formation to induce air currents in the vicinity of the rectifier arrangement which assist in cooling the rectifier arrangement.

Preferably, a second rectifier component is provided, the second rectifier component being electrically connected to a second bus bar, the second bus bar preferably being provided with at least one fan blade formation. The first and second bus bars are each conveniently of generally arcuate form.

A bracket may be provided to which the first and second bus bars are connected. The bracket is preferably electrically insulated from the bus bars.

The rectifier components conveniently comprise diodes, preferably stud diodes provided with screw-threaded regions whereby they can be secured to the bracket and used to secure the bus bars to the bracket.

The invention also relates to a generator device including a generator stage having a wound rotor arranged, in use, to output an electrical current, a subsequent generator stage having a wound field rotor, and a rotatable rectifier arrangement as defined hereinbefore and operable to rectify the output current, the rectified output current being supplied to the wound field rotor.

The invention will further be described, by way of example, with reference to the accompanying drawings, in which:
Figure 1 is an exploded perspective view illustrating the rotating rectifier arrangement of one embodiment of the invention;
Figures 2 and 3 are views illustrating steps in the assembly of the rotating rectifier arrangement;
Figure 4 is an enlarged, sectional view of part of the rotating rectifier arrangement; and
Figures 5 and 6 are front and side views of part of the rotating rectifier arrangement.

The accompanying drawings illustrate a rotating rectifier arrangement intended for use in an electrical generator, for example for use in aerospace applications. Although the rotating rectifier arrangement may be used in other applications, the application illustrated in the accompanying drawings is in a three-stage electrical generator. The generator comprises a first stage (not shown) in which a series of permanent magnets attached to a rotor of the generator are rotated relative to a wound stator. It will be appreciated that the movement of the magnets induces a current in the wound stator and, in use, at least part of the induced current is rectified and used to excite a wound stator of a second, exciter stage of the generator. A part 10 of the rotor associated with the second stage of the generator comprises a series of winding. It will be appreciated that the rotation of the rotor relative to the stator induces a current in each of the windings of the second stage. The rotating rectifier arrangement of the embodiment of the invention is used to rectify the output of the second stage of the generator, forming a DC current input to third-stage windings of the generator which are also carried by the rotor. It will be understood that the rotation of the rotor shaft induces an electrical current in stator windings of the third-stage of the generator which, in use, are used to power other components of the aircraft or to charge batteries, or the like.

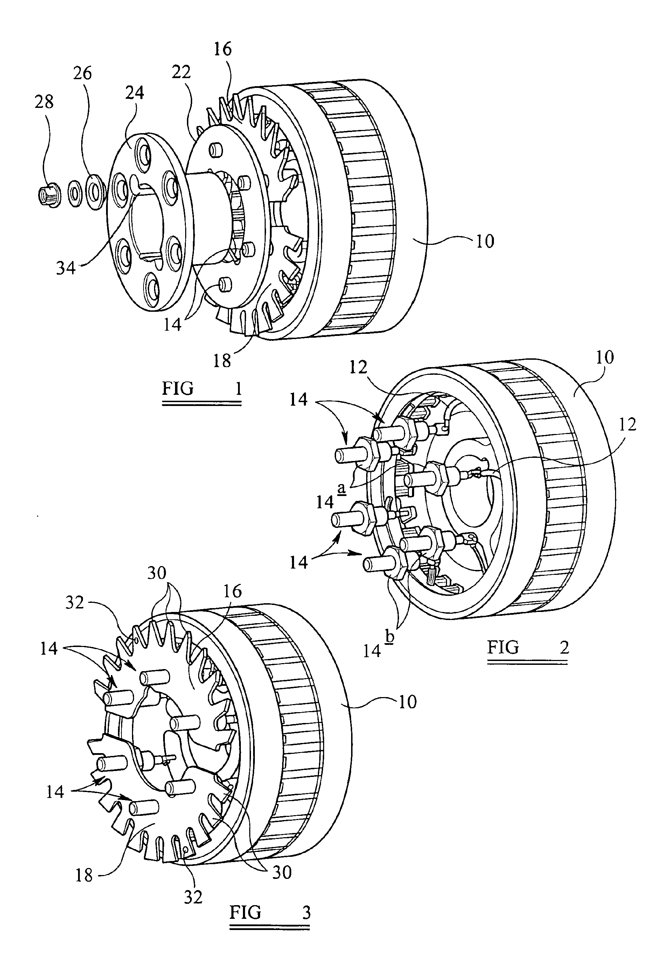

Figures 1, 2 and 3 illustrate the part 10 of the rotor of the second stage of the generator. As best seen in Figure 2, the rotor includes three sets of windings, thus the rotor has six winding terminals 12. Electrically connected to each terminal 12 is an associated stud diode 14. It will be appreciated that two of the terminals 12 are associated with each winding coil of the rotor, one being associated with each end thereof. Of each pair of terminals 12, one is connected to the anode of the associated stud diode 14a, and the other is connected to the cathode of the respective stud diode 14b.

As illustrated in Figure 3, the three stud diodes 14a arranged with their anodes connected to the associated terminal 12 are each electrically connected to one another by a first bus bar 16, the remaining three diodes 14b being electrically connected to one another by a second bus bar 18. As illustrated, the electrical connections between the bus bars 16, 18 and the stud diodes 14 are made by the stud diodes 14 extending through openings 20 formed in the bus bars 16, 18, the bus bars 16, 18 mechanically engaging respective terminal parts of the stud diodes 14.

As illustrated, the bus bars 16, 18 are each of arcuate form, the bus bars 16, 18 together forming a generally annular body. As shown best in Figure 3, spaces are formed between the bus bars 16, 18 in order to ensure that the bus bars 16, 18 are electrically insulated from one another.

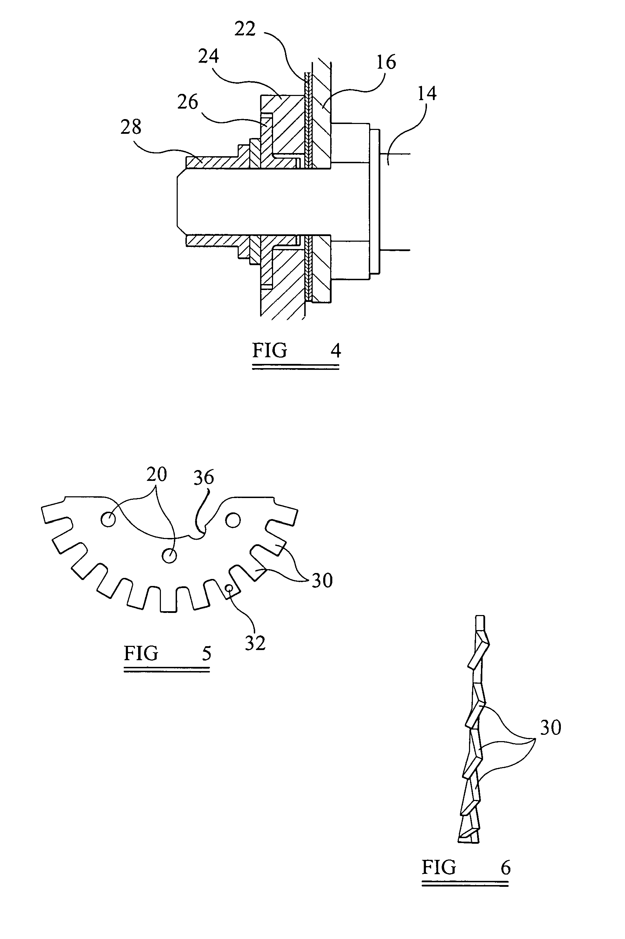

An annular, insulating material member 22 bears against the bus bars 16, 18, openings being provided in the annular member 22 through which the stud diodes 14 extend, as shown in Figures 1 and 4. A bracket 24, for example of a metallic material is provided, the studs 14 including regions extending through respective openings formed in the bracket 24. It will be appreciated that the bracket is electrically insulated from the bus bars 16, 18 by the member 22. In order to ensure that the stud diodes 14 are electrically insulated from the bracket 24, insulating shouldered washer members 26 are located therebetween, and between the bracket 24 and nuts 28 secured to screw-threaded regions of the stud diodes 14 and used to secure the stud diodes 14 and bus bars 16, 18 to the bracket 24. This arrangement is best illustrated in Figure 4 from which it is clear that the bracket 24 is electrically insulated from the stud 14 and bus bars 16, 18, thus there is no direct electrical connection between the bus bars 16, 18.

The bus bars 16, 18 are of relatively large dimensions, thus having a relatively large surface area. Consequently, they are reasonably good at dissipating heat transferred thereto from the diodes 14, and so are of assistance in providing cooling.

Further as shown in Figures 3, 5 and 6, the bus bars, 16, 18 are each formed, at their radially outer peripheries, with a series of fan blade formations 30. The formations 30 are formed integrally with the remainder of the bus bars 16, 18 and, as best seen in Figure 6, the fan blade components 30 are twisted relative to the plane of the remainder of the bus bars 16, 18 with the result that, in use, upon rotation of the rotor 10, the bus bars 16, 18 will rotate and the fan blade formations 30 will cause the formation of air currents, the air currents flowing over the stud diodes 14 and over the remainder of the bus bars 16, 18 thereby effecting cooling of the stud diodes 14, and bus bars 16, 18, which serve as heat sinks for the stud diodes 14.

As cooling is enhanced by the use of appropriately shaped and sized bus bars, it will be appreciated that size and weight constraints can more easily be satisfied.

One of the fan blade formations 30 of each of the bus bars 16, 18 is formed with a connection aperture 32 to which an electrical connector cable is soldered, in use, to provide a direct current electrical connection between each of the bus bars 16, 18 and the rotor winding of the third stage of the generator.

The bracket 24, and member 22 are each provided with recesses 34 whereby they are keyed, in use, to a rotor shaft (not shown) to drive the rectifier arrangement for rotation with the rotor, clearance recesses 36 being provided to space the bus bars 16, 18 from the rotor shaft key, to avoid the formation of a short circuit.

It will be appreciated that although in the description hereinbefore the rectifier components cooled by the operation of the fan blade formations 30 are stud diodes 14 other rectifier components could be cooled in a similar manner and the invention extends to such arrangements. A range of other modifications or alterations may be made to the arrangement described hereinbefore without departing from the scope of the invention.

## Claims

1. A rotatable rectifier arrangement comprising at least one first rectifier component (14a) electrically connected to a bus bar (16), the bus bar (16) being provided with at least one fan blade formation (30).

2. An arrangement according to Claim 1, wherein the fan blade formation (30) is formed integrally with the bus bar (16).

3. An arrangement according to Claim 1 or Claim 2, further comprising at least one second rectifier component (14b), the second rectifier component (14b) being electrically connected to a second bus bar (18).

4. An arrangement according to Claim 3, wherein the second bus bar (18) is provided with at least one fan blade formation (30).

5. An arrangement according to any of the preceding claims, wherein the or each bus bar (16, 18) is of generally arcuate form.

6. An arrangement according to Claim 3 or Claim 4, further comprising a bracket to which the first and second bus bars (16, 18) are connected.

7. An arrangement according to Claim 6, wherein the bracket (24) is electrically insulated from the first and second bus bars (16, 18).

8. An arrangement according to any of the preceding claims, wherein the or each rectifier component comprises a diode.

9. An arrangement according to Claim 8, wherein the or each diode comprises a stud diode provided with a screw-threaded region whereby it can be secured to the bracket (24) and used to secure one of the first and second bus bars (16, 18) to the bracket (24).

10. A generator device including a generator stage having a wound rotor arranged, in use, to output an electrical current, a subsequent generator stage having a wound field rotor, and a rotatable rectifier arrangement as claimed in any of the preceding claims and operable to rectify the output current, the rectified output current being supplied to the wound field rotor.
